# EUROPEAN PATENT APPLICATION

(11) **EP 4 350 865 A1**
(43) Date of publication of application: **10.04.2024**
(21) Application number: 22815852.3
(22) Date of filing: 18.05.2022
(51) Int. Cl.: H01M 50/296, H01G 11/74, H01G 11/78, H01G 11/80, H01M 50/276, H01M 50/588, H01M 50/593

(54) **POWER STORAGE DEVICE**

(30) Priority: 04.06.2021 JP 2021094615
(71) Applicant: GS Yuasa International Ltd., Kisshoin, Minami-ku, Kyoto-shi, Kyoto 601-8520 (JP)
(72) Inventor: SASAKI, Shun, Kyoto-shi, Kyoto 601-8520 (JP); KONISHI, Atsuyuki, Kyoto-shi, Kyoto 601-8520 (JP); KAWAI, Takuma, Kyoto-shi, Kyoto 601-8520 (JP)
(74) Representative: Grünecker Patent- und Rechtsanwälte PartG mbB
(86) International application number: PCT/JP2022/020627
(87) International publication number: WO 2022/255100

(57) **Abstract**

An energy storage apparatus includes an energy storage device, an outer case that accommodates the energy storage device and includes a wall in which a through hole is formed, and a bus bar penetrating the through hole.

## Description

### TECHNICAL FIELD

The present invention relates to an energy storage apparatus including an energy storage device, an outer case, and a bus bar.

### BACKGROUND ART

Conventionally, there has been known an energy storage apparatus that includes an energy storage device, an outer case that accommodates the energy storage device, and a bus bar, and in which the bus bar protrudes from the outer case. Patent Document 1 discloses a battery pack (energy storage apparatus) in which a bus bar protrudes from between a case and a cover member which are two members forming an outer case that accommodates battery cells (energy storage devices).

### PRIOR ART DOCUMENTS

### PATENT DOCUMENTS

Patent Document 1: WO 2017/169728 A

### SUMMARY OF THE INVENTION

### PROBLEMS TO BE SOLVED BY THE INVENTION

In the energy storage apparatus having the above-mentioned conventional configuration, there is a problem that the arrangement position of the bus bar is limited. In the energy storage apparatus disclosed in Patent Document 1, since the bus bar protrudes from between two members (the case and the cover member) which form the outer case, the arrangement position of the bus bar is restricted. Thus, problems such as difficulty in connecting the bus bar and an external conductive member may occur.

The present invention has been made by the inventor of the present application with a new focus on the above problems, and an object thereof is to provide an energy storage apparatus capable of improving the degree of freedom of an arrangement position of a bus bar.

### MEANS FOR SOLVING THE PROBLEMS

An energy storage apparatus according to one aspect of the present invention includes an energy storage device, an outer case that accommodates the energy storage device and includes a wall in which a through hole is formed, and a bus bar penetrating the through hole.

The present invention can be implemented not only as the energy storage apparatus but also as a combination of the outer case and the bus bar.

### ADVANTAGES OF THE INVENTION

According to the energy storage apparatus of the present invention, it is possible to improve the degree of freedom of an arrangement position of a bus bar.

### BRIEF DESCRIPTION OF THE DRAWINGS

Fig. 1 is a perspective view illustrating an external appearance of an energy storage apparatus according to an embodiment.
Fig. 2 is an exploded perspective view illustrating components included in the energy storage apparatus according to the embodiment in an exploded manner.
Fig. 3 is an exploded perspective view illustrating components included in the energy storage apparatus according to the embodiment in an exploded manner.
Fig. 4 is an exploded perspective view illustrating respective components of an energy storage device according to the embodiment in an exploded manner.
Fig. 5 is a perspective view illustrating configurations of bus bars according to the embodiment.
Fig. 6 is a perspective view and a perspective cross-sectional view illustrating a configuration of a terminal unit and a periphery thereof according to the embodiment.
Fig. 7 is a cross-sectional view illustrating a configuration of the terminal unit and a periphery thereof according to the embodiment.

### MODE FOR CARRYING OUT THE INVENTION

An energy storage apparatus according to one aspect of the present invention includes an energy storage device, an outer case that accommodates the energy storage device and includes a wall in which a through hole is formed, and a bus bar penetrating the through hole.

The energy storage apparatus has a configuration in which the through hole is formed at a position where the bus bar is desired to be disposed in the wall of the outer case, and the bus bar penetrates the through hole. Thus, since the bus bar can be arranged at a desired position, the degree of freedom of the arrangement position of the bus bar can be improved.

The wall may be made of metal, and the energy storage apparatus may further include an insulating member including an insulating portion disposed inside the through hole and around the bus bar.

When the wall in which the through hole is formed is made of metal, the wall and the bus bar may be electrically connected to each other. Accordingly, in the energy storage apparatus, the through hole is formed in the metal wall of the outer case, the bus bar is made to penetrate the through hole, and the insulating portion of the insulating member is disposed inside the through hole and around the bus bar. Thus, it is possible to improve insulation between the wall of the outer case and the bus bar and, at the same time, it is possible to improve the degree of freedom of the arrangement position of the bus bar.

The insulating member may further include a protruding portion protruding from the insulating portion along an outer surface of the wall, and the energy storage apparatus may further include an attachment member that is disposed outward on the wall and attaches the protruding portion to the wall from outside the wall.

With such a configuration, the attachment member that attaches the protruding portion of the insulating member on the wall from outside the wall is disposed outward on the wall of the outer case, and hence the insulating member can be easily attached to the wall by the attachment member. Thus, it is possible to easily improve insulation between the wall of the outer case and the bus bar and, at the same time, it is possible to improve the degree of freedom of the arrangement position of the bus bar.

The attachment member may penetrate the protruding portion, be inserted into a recessed portion formed in an outer surface of the wall, and be fixed to the wall.

With such a configuration, when the insulating member is attached to the wall of the outer case by the attachment member, the attachment member is not made to penetrate the wall, but the attachment member is inserted into the recessed portion formed in the outer surface of the wall and fixed to the wall. Thus, the through hole through which the attachment member penetrates is not formed in the wall of the outer case, and hence sealability of the outer case can be improved.

Further, a gasket disposed between the wall and the protruding portion may be included, in which the gasket may be disposed between the attachment member and the through hole.

With such a configuration, by disposing the gasket between the wall of the outer case and the protruding portion of the insulating member, it is possible to improve sealability of the outer case by the insulating member (sealability of the through hole of the wall by the insulating member). By disposing the gasket between the attachment member and the through hole of the wall, the through hole can be sealed by the gasket near the through hole, so that sealability of the outer case by the insulating member (sealability of the through hole of the wall by the insulating member) can be further improved.

The wall may be a side wall of the outer case, and the attachment member attaches the protruding portion to the side wall.

With such a configuration, by attaching the protruding portion of the insulating member to the side wall of the outer case, it is possible to suppress the insulating member from protruding in the height direction of the outer case. Thus, it is possible to suppress an increase in height of the energy storage apparatus.

Hereinafter, an energy storage apparatus according to an embodiment of the present invention (including a modification thereof) will be described with reference to the drawings. The embodiments described below illustrate comprehensive or specific examples. Numerical values, shapes, materials, constituent elements, arrangement positions and connection modes of the constituent elements, manufacturing processes, the order of the manufacturing processes, and the like illustrated in the following embodiments are merely examples, and are not intended to limit the present invention. In the drawings, dimensions and the like are not strictly illustrated. In the drawings, the same or similar components are denoted by the same reference numerals.

In the following description and drawings, a longitudinal direction of the energy storage apparatus, an arrangement direction of an energy storage unit and a control unit, an opposing direction of short side surfaces of a case of an energy storage device, or an arrangement direction of a pair of electrode terminals included in the energy storage device is defined as an X-axis direction. A lateral direction of the energy storage apparatus, an arrangement direction of the energy storage device, a bus bar plate, a bus bar, and a bus bar cover, an arrangement direction of a body and a lid of the case of the energy storage device, or a projecting direction of electrode terminals in the energy storage device is defined as a Y-axis direction. An arrangement direction of a body and a lid of the outer case of the energy storage apparatus, an arrangement direction of the energy storage device and the spacer, an opposing direction of long side surfaces of the case of the energy storage device, a stacking direction of plates of the electrode assembly of the energy storage device, or a vertical direction is defined as a Z-axis direction. The X-axis direction, the Y-axis direction, and the Z-axis direction are directions intersecting (orthogonal in the present embodiment) with each other. Although the Z-axis direction may not be the vertical direction depending on the usage mode, the Z-axis direction will be described below as the vertical direction for convenience of description.

In the following description, an X-axis positive direction indicates an arrow direction of an X-axis, and an X-axis negative direction indicates a direction opposite to the X-axis positive direction. The same applies to the Y-axis direction and the Z-axis direction. Expressions indicating relative directions or postures, such as parallel and orthogonal, strictly include cases where the directions or postures are not the same. The two directions being parallel not only means that the two directions are completely parallel, but also means that the two directions are substantially parallel, that is, the two directions include a difference of about several percent, for example. In the following description, the expression "insulation" means "electrical insulation".

### (Embodiment)

### [1 General description of energy storage apparatus 1]

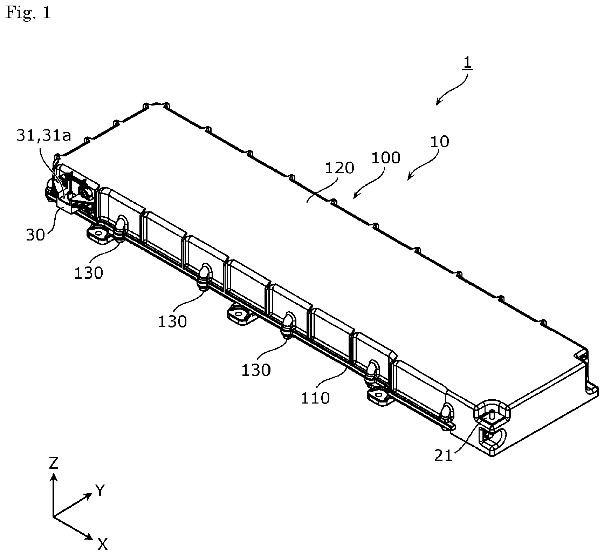

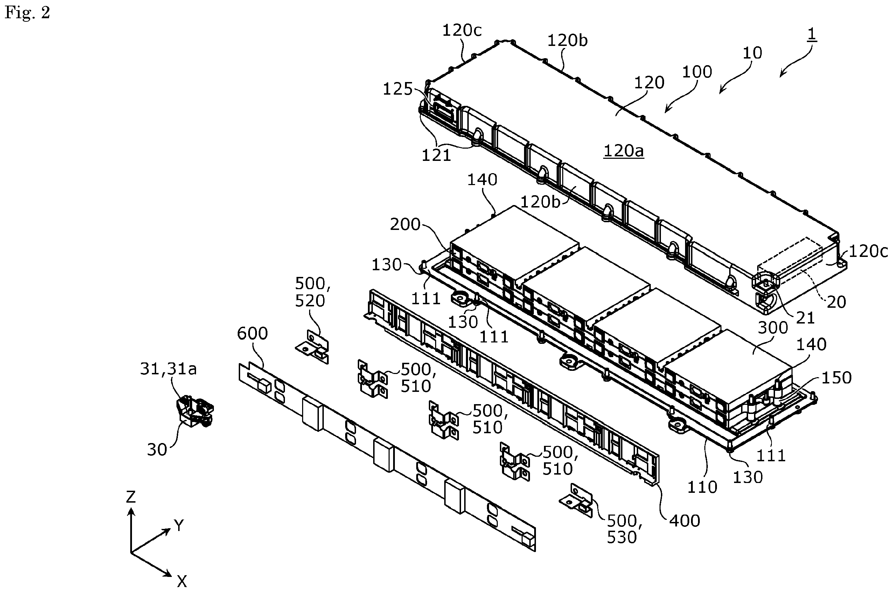

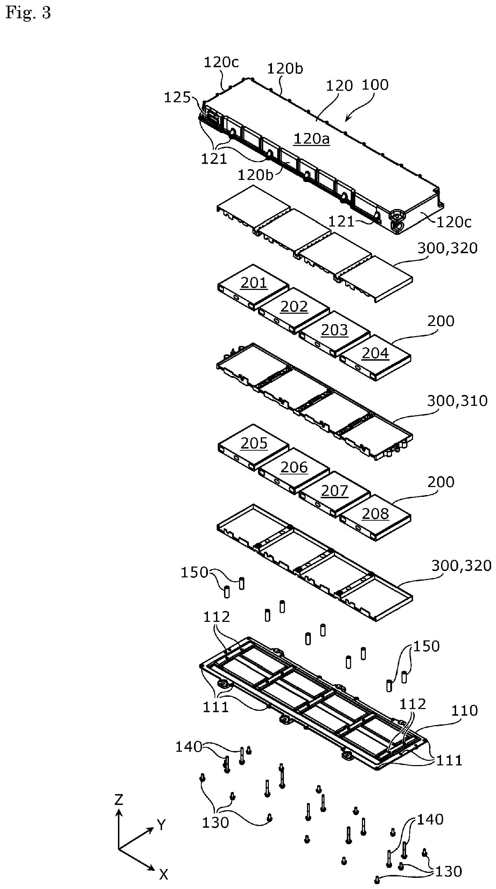

First, a schematic configuration of an energy storage apparatus 1 in the present embodiment will be described. Fig. 1 is a perspective view illustrating an external appearance of the energy storage apparatus 1 according to the present embodiment. Figs. 2 and 3 are exploded perspective views illustrating components included in the energy storage apparatus 1 according to the present embodiment in an exploded manner. Fig. 3 illustrates a configuration in which an outer case 100, energy storage devices 200, and spacers 300 illustrated in Fig. 2 are further disassembled.

The energy storage apparatus 1 is an apparatus capable of charging electricity from the outside and discharging electricity to the outside, and has a substantially rectangular parallelepiped shape in the present embodiment. The energy storage apparatus 1 is a battery module (assembled battery) used for power storage application, power supply application, or the like. Specifically, the energy storage apparatus 1 is used as a battery or the like for driving or starting an engine of a mobile body such as an automobile, a motorcycle, a watercraft, a ship, a snowmobile, an agricultural machine, a construction machine, or a railway vehicle for electric railway. Examples of the automobile include an electric vehicle (EV), a hybrid electric vehicle (HEV), a plug-in hybrid electric vehicle (PHEV), and a fossil fuel (gasoline, diesel fuel, liquefied natural gas, or the like) automobile. Examples of the railway vehicle for an electric railway include a train, a monorail, a linear motor car, and a hybrid train including both a diesel engine and an electric motor. The energy storage apparatus 1 can also be used as a stationary battery or the like used for home use, business use, or the like.

As illustrated in Fig. 1 and Fig. 2, the energy storage apparatus 1 includes an energy storage unit 10 and a control unit 20, and the energy storage unit 10 includes the outer case 100 and a terminal unit 30. Hereinafter, a portion of the energy storage apparatus 1 including the energy storage devices 200 is referred to as an energy storage unit 10, and a portion of the energy storage apparatus 1 including a control device for controlling the energy storage devices 200 is referred to as a control unit 20. As illustrated in Fig. 2 and Fig. 3, the energy storage devices 200, the spacers 300 (a first spacer 310 and second spacers 320), a bus bar plate 400, bus bars 500 (510 to 530), a bus bar cover 600, the control unit 20, and the like are accommodated in the inside of the outer case 100. In addition to the above-mentioned components, the energy storage apparatus 1 may include an exhaust portion or the like for exhausting a gas discharged from the energy storage devices 200 to the outside of the outer case 100.

The terminal unit 30 is a member including an external terminal 31a which is a module terminal (total terminal) on a positive electrode or a negative electrode of the energy storage apparatus 1, and is attached to an end in the X-axis negative direction of a side wall in a Y-axis negative direction (a long side wall 120b to be described later) of the outer case 100. The terminal unit 30 includes a bus bar 31. The bus bar 31 is a plate-shaped conductive member, and is formed by a conductive member made of metal such as aluminum, an aluminum alloy, copper, a copper alloy, or nickel, a combination thereof, or a conductive member other than metal. The bus bar 31 has a configuration in which an end in the Y-axis positive direction is connected to a bus bar 520, and an end in the Y-axis negative direction has a function as the external terminal 31a. The external terminal 31a is an external terminal of the negative electrode. Thus, the energy storage devices 200 which the energy storage unit 10 includes and the external terminal 31a are electrically connected to each other through the bus bar 520. The bus bar 31 and the bus bar 520 are connected (joined) by bolt fastening, but may be connected (joined) by welding or the like. A configuration of the terminal unit 30 will be described in detail later.

The control unit 20 is a device including a control device (not illustrated) that controls the energy storage devices 200 included in the energy storage unit 10, and is specifically a battery management system (BMS) that controls the energy storage devices 200. The control device is a circuit board that controls charging-discharging of the energy storage device 200, a fuse, a relay, a semiconductor switch such as a field effect transistor (FET), a shunt resistor, or the like.

An external terminal 21 which is a module terminal (total terminal) on the positive electrode or the negative electrode of the energy storage apparatus 1 is disposed at an end of the outer case 100 in the X-axis positive direction and the Y-axis negative direction. The external terminal 21 is a terminal (the external terminal on the positive electrode) having a polarity different from that of the external terminal 31a of the terminal unit 30. The external terminal 21 is electrically connected to the energy storage device 200. The energy storage apparatus 1 charges electricity from the outside and discharges electricity to the outside through the external terminals 21 and 31a. The external terminal 21 is formed by any conductive material or the like that can be used for the bus bar 31.

The outer case 100 is a box-shaped (substantially rectangular parallelepiped shape) case (module case) constituting a housing (outer shell) of the energy storage apparatus 1 (energy storage unit 10). The outer case 100 is disposed outward of the energy storage devices 200 and the like, fixes the energy storage devices 200 and the like at predetermined positions, and protects the energy storage devices 200 and the like from an impact or the like. The outer case 100 includes a first outer case 110 and a second outer case 120 which are disposed and aligned in the Z-axis direction, and joining members 130 and 140 for joining the first outer case 110 and the second outer case 120 to each other, and collars 150.

The first outer case 110 is a flat rectangular member which is disposed in a Z-axis negative direction of the second outer case 120 and constitutes a bottom wall of the outer case 100, and on which the energy storage devices 200 and the like are mounted. The second outer case 120 is a bottomed rectangular cylindrical member that constitutes a body (a portion other than the bottom wall) of the outer case 100, and is connected (joined) to the first outer case 110 to cover the energy storage devices 200 and the like. The second outer case 120 includes an upper wall 120a, a pair of long side walls 120b, and a pair of short side walls 120c. The second outer case 120 is formed with an opening that faces the Z-axis negative direction, and the first outer case 110 functions as a lid body that closes the opening of the second outer case 120. The first outer case 110 and the second outer case 120 are formed by a metal member such as stainless steel, aluminum, an aluminum alloy, iron, or a steel plate, or a member having high rigidity such as the metal member subjected to an insulation treatment such as an insulation coating, from a viewpoint of ensuring safety (pressure breakage resistance). The first outer case 110 and the second outer case 120 can be formed by, for example, aluminum die casting or the like. The first outer case 110 and the second outer case 120 may be formed by members made of the same material or may be formed by members made of different materials.

Specifically, connecting portions 111 and 112 which the first outer case 110 includes and connecting portions 121 and the like which the second outer case 120 includes are joined to each other by using the joining members 130 and 140 and the collars 150, and thus the first outer case 110 and the second outer case 120 are connected (fixed) to each other. The long side wall 120b that is the wall (side wall) of the second outer case 120 in the Y-axis negative direction is disposed at a position where the bus bar plate 400, the bus bars 500 (510 to 530), and the bus bar cover 600 are sandwiched between the long side wall 120b and the energy storage devices 200. A through hole 125 is formed in the long side wall 120b. The through hole 125 is a through hole that is disposed at an end of the long side wall 120b in the X-axis negative direction, penetrates the long side wall 120b in the Y-axis direction, and has a rectangular shape when viewed from the Y-axis direction. The through hole 125 is a through hole through which the bus bar 31 passes when the bus bar 31 of the terminal unit 30 is connected (joined) to the bus bar 520.

In the present embodiment, the first outer case 110 and the second outer case 120 are joined to each other to sandwich the energy storage devices 200 therebetween. The first outer case 110 and the second outer case 120 sandwich and restrain the energy storage devices 200 in the Z-axis direction, and thus apply a restraining force to the energy storage devices 200 in the Z-axis direction. Specifically, the first outer case 110 and the second outer case 120 are disposed over a plurality of energy storage devices 200 aligned in the X-axis direction at positions where a plurality of energy storage devices 200 aligned in the X-axis direction and the Z-axis direction and a plurality of the spacers 300 (the first spacer 310 and the second spacers 320) aligned in the Z-axis direction are sandwiched therebetween in the Z-axis direction (first direction). The first outer case 110 and the second outer case 120 collectively sandwich and restrain the plurality of energy storage devices 200 and the plurality of spacers 300 to each other. As described above, it can also be said that the first outer case 110 and the second outer case 120 are a pair of end plates.

The energy storage device 200 is a secondary battery (battery cell) capable of charging and discharging electricity, and more specifically, is a nonaqueous electrolyte secondary battery such as a lithium ion secondary battery. The energy storage device 200 has a flat rectangular parallelepiped shape (prismatic shape), and the plurality of energy storage devices 200 is arrayed in the X-axis direction and the plurality of energy storage devices 200 is stacked in the Z-axis direction. In the present embodiment, eight energy storage devices 200 are arrayed in the X-axis direction and the Z-axis direction in a state where the eight energy storage devices 200 are placed horizontally (lying sideways) (in a state where long side surfaces 211a of the energy storage devices described later are directed in the Z-axis direction). Specifically, four energy storage devices 201 to 204 are arrayed in the X-axis direction from the X-axis negative direction toward the X-axis positive direction, and four energy storage devices 205 to 208 are arrayed in the X-axis direction from the X-axis negative direction toward the X-axis positive direction. The four energy storage devices 201 to 204 and the four energy storage devices 205 to 208 are stacked (stacked flat) in the Z-axis direction.

The number of the energy storage devices 200 is not particularly limited, any number of the energy storage devices 200 may be arranged (arrayed) in the X-axis direction, and any number of the energy storage devices 200 may be arranged (stacked) in the Z-axis direction. The shape of the energy storage device 200 is not limited to the above-mentioned square shape, and may be a polygonal columnar shape, a cylindrical shape, an elliptical columnar shape, an oval columnar shape, or the like other than the above-mentioned prismatic shape. The energy storage device 200 is not limited to the nonaqueous electrolyte secondary battery, and may be a secondary battery other than the nonaqueous electrolyte secondary battery, or may be a capacitor. The energy storage device 200 may be not a secondary battery but a primary battery that can use stored electricity without being charged with electricity by a user. The energy storage device 200 may be a battery using a solid electrolyte. The energy storage device 200 may be a pouch type energy storage device. Configurations of the energy storage devices 200 will be described in detail later.

The spacers 300 are rectangular and flat spacers which are disposed and aligned with the energy storage devices 200 in the Z-axis direction and are disposed adjacently to the energy storage devices 200. The spacers 300 are disposed in the Z-axis positive direction or the Z-axis negative direction of the energy storage device 200 so as to oppose the long side surface 211a of the energy storage device 200. The spacers 300 are formed by a resin member (insulating member) such as polycarbonate (PC), polypropylene (PP), polyethylene (PE), polystyrene (PS), polyphenylene sulfide resin (PPS), polyphenylene ether (PPE (including modified PPE)), polyethylene terephthalate (PET), polybutylene terephthalate (PBT), polyether ether ketone (PEEK), tetrafluoroethylene-perfluoroalkyl vinyl ether (PFA), polytetrafluoroethylene (PTFE), polyether sulfone (PES), polyamide (PA), ABS resin, or a composite material thereof, or a heat insulating material such as a damper material.

In the present embodiment, the first spacer 310 and the pair of second spacers 320 are disposed as the spacers 300. The first spacer 310 is disposed at a position adjacent to the plurality of energy storage devices 200 arrayed in the X-axis direction in the Z-axis direction so as to extend over the plurality of energy storage devices 200. Specifically, the first spacer 310 is disposed at a position adjacent in the Z-axis direction to the four energy storage devices 200 (201 to 204 or 205 to 208) aligned in the X-axis direction, and extends in the X-axis direction over the four energy storage devices 200. In the present embodiment, the first spacer 310 is an intermediate spacer that is disposed between the energy storage devices 200 adjacent to each other in the Z-axis direction (between the four energy storage devices 201 to 204 and the four energy storage devices 205 to 208).

The second spacers 320 are disposed over the plurality of energy storage devices 200 at positions where the plurality of energy storage devices 200 arrayed in the X-axis direction is sandwiched between the second spacer 320 and the first spacer 310 in the Z-axis direction. Specifically, the second spacers 320 are each disposed at a position where the four energy storage devices 200 (201 to 204 or 205 to 208) aligned in the X-axis direction is sandwiched between the second spacer 320 and the first spacer 310 in the Z-axis direction, and extend in the X-axis direction over the four energy storage devices 200. In the present embodiment, the second spacers 320 are end spacers each disposed between the energy storage devices 200 and the first outer case 110 or the second outer case 120. Specifically, the pair of second spacers 320 is disposed between the four energy storage devices 205 to 208 and the first outer case 110 and between the four energy storage devices 201 to 204 and the second outer case 120.

In this manner, the first spacer 310 and the pair of second spacers 320 are disposed so as to sandwich the energy storage devices 200 in the Z-axis direction, and insulate the energy storage devices 200 from each other and the energy storage devices 200 from the first outer case 110 and the second outer case 120.

The bus bar plate 400 is a flat rectangular insulating member which is disposed between the energy storage devices 200 and the bus bars 500, and can insulate the bus bars 500 from other members and regulate positions of the bus bars 500. The bus bar plate 400 is formed by any insulating resin material or the like that can be used for the spacers 300. The bus bar plate 400 is disposed in the Y-axis negative direction of the plurality of energy storage devices 200, and is positioned with respect to the plurality of energy storage devices 200. Thus, the bus bars 500 are positioned with respect to the plurality of energy storage devices 200, and are joined to electrode terminals 220 which the plurality of energy storage devices 200 includes and which will be described later.

The bus bars 500 are plate-like members which are disposed in the Y-axis negative direction of the plurality of energy storage devices 200 and connected (joined) to the plurality of energy storage devices 200 and the terminal unit 30. In the present embodiment, three bus bars 510, the bus bar 520, and the bus bar 530 are disposed as bus bars 500. The bus bars 510 are disposed between the bus bar 520 and the bus bar 530, and connects the electrode terminals 220 of the adjacent energy storage devices 200 to each other. The bus bar 520 is disposed in the most X-axis negative direction among the plurality of bus bars 500, connects the electrode terminals 220 of the energy storage devices 200 in the most X-axis negative direction and the bus bar 31 of the terminal unit 30, and electrically connects the energy storage device 200 and the external terminal 31a. The bus bar 530 is disposed in the most X-axis positive direction among the plurality of bus bars 500, and electrically connects the electrode terminals 220 of the energy storage devices 200 in the most X-axis positive direction and the external terminal 21.

In the present embodiment, the bus bars 500 and the electrode terminals 220 of the energy storage devices 200 are connected (joined) to each other by welding, but may be connected (joined) to each other by bolt fastening or the like. The bus bars 500 are formed by any conductive material or the like that can be used for the bus bar 31. In the present embodiment, the bus bars 500 form four sets of energy storage device groups by connecting two energy storage devices 200 in parallel, and connect the four sets of energy storage device groups in series, but the connection form of the bus bars 500 is not particularly limited. Configurations of the bus bars 500 will be described in detail later.

The bus bar cover 600 is an insulating cover member that is disposed so as to cover the bus bars 500 and insulates the bus bars 500 from other members. In the present embodiment, the bus bar cover 600 is a plate-like member arranged to extend in the X-axis direction over the plurality of bus bars 500 (510 to 530) so as to cover the plurality of bus bars 500. The bus bar cover 600 is disposed between the bus bars 500 and the wall (the long side wall 120b in the Y-axis negative direction) of the second outer case 120. Thus, the bus bar cover 600 insulates the plurality of bus bars 500 from other members such as the long side wall 120b. The bus bar cover 600 is formed by any insulating resin material or the like that can be used for the spacers 300. The bus bar cover 600 is disposed at a position where the bus bars 500 are sandwiched between the bus bar cover 600 and the bus bar plate 400, and is attached and fixed to the bus bar plate 400 by including a portion to be fitted to the bus bar plate 400.

### [2 Description of energy storage device 200]

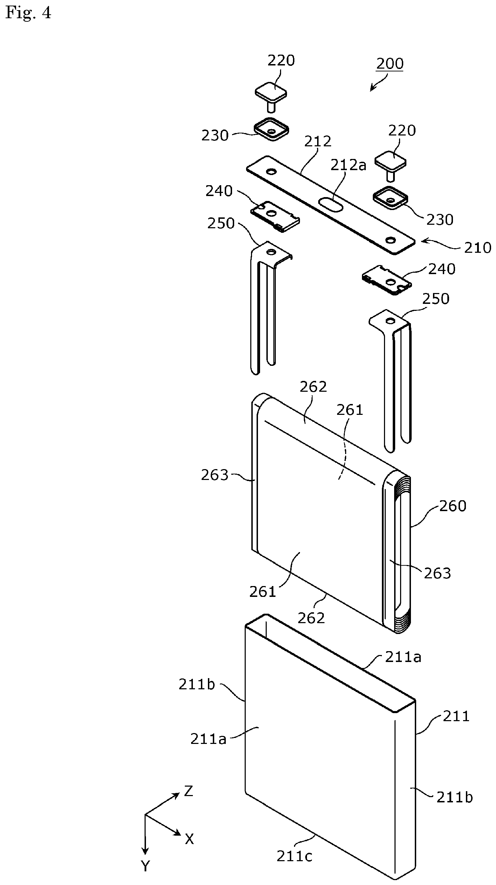

A configuration of the energy storage device 200 will be described in detail. The eight energy storage devices 200 (201 to 208) included in the energy storage unit 10 all have similar configurations, and thus the configuration of one energy storage device 200 will be described below. Fig. 4 is an exploded perspective view illustrating respective components of the energy storage device 200 according to the present embodiment in an exploded manner. Specifically, Fig. 4 is an exploded view of respective parts of the energy storage device 200 illustrated in Fig. 3 in a state where the energy storage device is vertically disposed (erected).

As illustrated in Fig. 4, the energy storage device 200 includes a case 210, a pair of (positive electrode and negative electrode) electrode terminals 220, and a pair of (positive electrode and negative electrode) gaskets 230. Inside the case 210, a pair of (positive electrode and negative electrode) gaskets 240, a pair of (positive electrode and negative electrode) current collectors 250, and an electrode assembly 260 are accommodated. Although an electrolyte solution (nonaqueous electrolyte) is sealed in the case 210, the illustration is omitted. A kind of the electrolyte solution is not particularly limited as long as performance of the energy storage device 200 is not impaired, and various electrolyte solutions can be selected. In addition to the above components, a spacer disposed on a side, a lower side, or the like of the electrode assembly 260, an insulating film enclosing the electrode assembly 260 or the like, an insulating sheet covering an outer surface of the case 210, or the like may be disposed.

The case 210 is a case having a rectangular parallelepiped shape (prismatic shape or box shape) including a case body 211 in which an opening is formed and a case lid body 212 that closes the opening of the case body 211. The case 210 has a structure in which the inside can be sealed by joining the case body 211 and the case lid body 212 to each other by welding or the like after the electrode assembly 260 and the like are accommodated in the case body 211. The material of the case body 211 and the case lid body 212 is not particularly limited, but is preferably a weldable metal such as stainless steel, aluminum, an aluminum alloy, iron, or a plated steel plate, for example.

The case body 211 is a member having a rectangular cylindrical shape and a bottom constituting a body of the case 210, and an opening is formed on a Y-axis negative direction side. The case body 211 includes a pair of rectangular and planar (flat) long side surfaces 211a on both side surfaces in the Z-axis direction, a pair of rectangular and planar (flat) short side surfaces 211b on both side surfaces in the X-axis direction, and a rectangular and planar (flat) bottom surface 211c on the Y-axis positive direction side. The case lid body 212 is a rectangular plate-like member constituting a lid body of the case 210, and is arranged to extend in the X-axis direction in the Y-axis negative direction of the case body 211. The case lid body 212 is provided with a gas release valve 212a that releases the pressure when the pressure inside the case 210 increases, an electrolyte solution filling unit (not illustrated) for filling an electrolyte solution inside the case 210, and the like.

The electrode assembly 260 is an energy storage element (power generating element) formed by stacking a positive electrode plate, a negative electrode plate, and a separator. The positive electrode plate is obtained by forming a positive active material layer on a positive electrode substrate layer which is a current collecting foil made of a metal such as aluminum or an aluminum alloy. The negative electrode plate is obtained by forming a negative active material layer on a negative electrode substrate layer which is a current collecting foil made of a metal such as copper or a copper alloy. As the active material used for the positive active material layer and the negative active material layer, a known material can be appropriately used as long as it can occlude and release lithium ions. In the present embodiment, the electrode assembly 260 is a winding type (what is called a vertical winding type) electrode assembly which is formed by winding plates (a positive electrode plate and a negative electrode plate) around a winding axis (a virtual axis parallel to the X-axis direction) extending in the X-axis direction.

Here, the plates (the positive electrode plate and the negative electrode plate) of the electrode assembly 260 are stacked in the Z-axis direction, and thus the Z-axis direction is also referred to as a stacking direction. The electrode assembly 260 is formed by stacking plates in the stacking direction. The electrode assembly 260 includes a pair of flat portions 261 aligned in the Z-axis direction and a pair of curved portions 262 aligned in the Y-axis direction by winding plates, and the stacking direction is a stacking direction of the plates in the flat portions 261. The flat portions 261 are flat portions connecting the ends of the pair of curved portions 262, and the curved portions 262 are portions curved in a semicircular shape or the like so as to protrude in the Y-axis direction. The direction in which flat surfaces of the flat portions 261 face or the opposing direction of the pair of flat portions 261 can be defined as the stacking direction. Therefore, it can be said that the energy storage devices 201 and 205 are disposed and aligned in the stacking direction. The same applies to the other energy storage devices 200. The X-axis direction in which the energy storage devices 201 to 204 are arrayed is also referred to as an arraying direction. The energy storage devices 201 to 204 are arrayed in the arraying direction intersecting with the stacking direction. The same applies to the energy storage device 205 to 208.

In the electrode assembly 260, the positive electrode plate and the negative electrode plate are wound so as to be shifted from each other in the X-axis direction, and thus the positive electrode plate and the negative electrode plate each have a portion (active material layer non-forming portion) where the active material is not formed (applied) and the substrate layer is exposed at an end in a shifted direction. The electrode assembly 260 include ends 263 that protrude from the flat portions 261 and the curved portions 262 toward both sides in the X-axis direction at both ends in the X-axis direction and are connected to the current collectors 250 by stacking the active material layer non-forming portions of the positive electrode plate and the negative electrode plate.

The electrode assembly 260 may be an electrode assembly in any form such as what is called a horizontal winding type electrode assembly formed by winding plates around a winding axis extending in the Y-axis direction, a stack type electrode assembly formed by stacking a plurality of flat plates, or a bellows type electrode assembly formed by folding plates in a bellows shape. In a case of the horizontal winding type electrode assembly, flat portions other than the curved portions and a connecting portion (tab) with the current collector are flat portions, and in a case of the stack-type electrode assembly and the bellows-type electrode assembly, flat portions other than the connecting portion (tab) with the current collector are flat portions.

The electrode terminals 220 are terminal members (a positive electrode terminal and a negative electrode terminal) of the energy storage device 200, and is disposed on the case lid body 212 so as to protrude in the Y-axis negative direction. The electrode terminals 220 are electrically connected to the positive electrode plate and the negative electrode plate of the electrode assembly 260 via the current collectors 250. The electrode terminals 220 are formed by a conductive member made of metal such as aluminum, an aluminum alloy, copper, or a copper alloy.

The current collectors 250 are conductive members (a positive electrode current collector and a negative electrode current collector) electrically connected to the electrode terminals 220 and the ends 263 of the electrode assembly 260. The current collectors 250 are made of aluminum, an aluminum alloy, copper, a copper alloy, or the like. The gaskets 230 and 240 are sealing members which are disposed between the case lid body 212 and the electrode terminals 220 and the current collectors 250 and have a flat plate shape and an insulating property. The gaskets 230 and 240 are formed by any insulating resin material or the like that can be used for the spacers 300.

### [3 Description of bus bar 500]

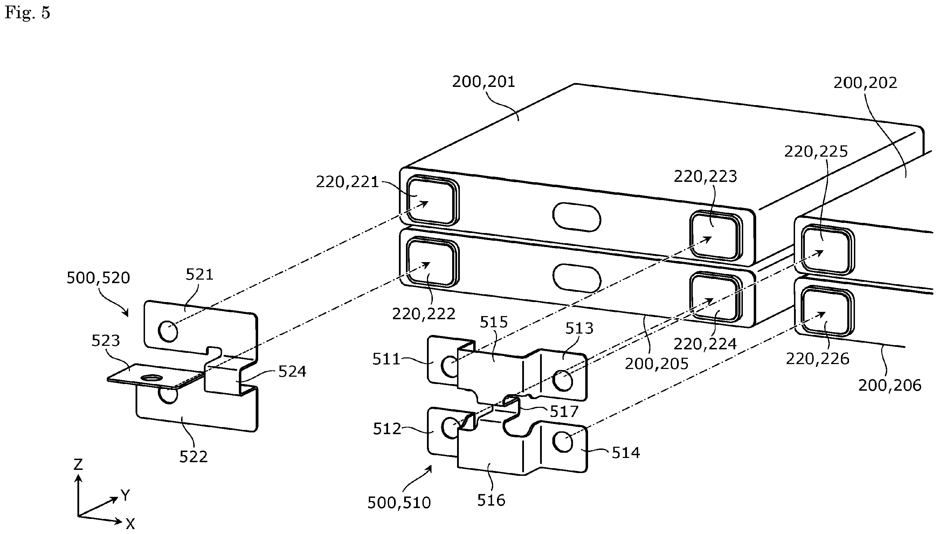

Next, configurations of the bus bars 500 will be described in detail. Fig. 5 is a perspective view illustrating configurations of the bus bars 500 according to the present embodiment. Specifically, Fig. 5 illustrates the bus bar 510 and the bus bar 520 in the X-axis negative direction out of the bus bars 500, and the energy storage devices 200 (201, 202, 205, and 206) to which the bus bars 510 and 520 are connected. Among the bus bars 500, the three bus bars 510 have the same configuration, and the bus bars 520 and 530 have the same configuration. Thus, the two bus bars 510 and 530 in the X-axis positive direction are not illustrated in Fig. 5.

As illustrated in Fig. 5, the bus bar 510 includes a connecting portion 511, a connecting portion 512, a connecting portion 513, a connecting portion 514, a linking portion 515, a linking portion 516, and a linking portion 517. The bus bar 520 includes a connecting portion 521, a connecting portion 522, a connecting portion 523, and a linking portion 524.

The connecting portion 511 is a flat and rectangular portion that is connected (joined) to an electrode terminal 223 which the energy storage device 201 includes in the X-axis positive direction and is parallel to the XZ plane. The electrode terminal 223 is a positive electrode terminal (positive electrode terminal). The connecting portion 512 is a flat and rectangular portion that is disposed in the Z-axis negative direction of the connecting portion 511, is connected (joined) to an electrode terminal 224 which the energy storage device 205 includes in the X-axis positive direction and is parallel to the XZ plane. The electrode terminal 224 is a positive electrode terminal (positive electrode terminal). The connecting portion 513 is a flat and rectangular portion that is disposed in the X-axis positive direction of the connecting portion 511, is connected (joined) to an electrode terminal 225 which the energy storage device 202 includes in the X-axis negative direction and is parallel to the XZ plane. The electrode terminal 225 is a negative electrode terminal (negative electrode terminal). The connecting portion 514 is a flat and rectangular portion that is disposed in the Z-axis negative direction of the connecting portion 513, is connected (joined) to an electrode terminal 226 which the energy storage device 206 includes in the X-axis negative direction and is parallel to the XZ plane. The electrode terminal 226 is a negative electrode terminal (negative electrode terminal).

The linking portion 515 is a protruding portion that protrudes in the Y-axis negative direction from an end edge of connecting portion 511 in the X-axis positive direction and an end edge of connecting portion 513 in the X-axis negative direction and has a substantially C shape as viewed in the Z-axis direction. The linking portion 516 is a protruding portion that protrudes in the Y-axis negative direction from an end edge of connecting portion 512 in the X-axis positive direction and an end edge of connecting portion 514 in the X-axis negative direction and has a substantially C shape as viewed in the Z-axis direction. The linking portion 517 is a recessed portion that is recessed in the Y-axis positive direction from an end edge of the linking portion 515 in the Z-axis negative direction and an end edge of the linking portion 516 in the Z-axis positive direction, and has a substantially C shape as viewed in the X-axis direction. With such a configuration, the linking portion 515 connects the connecting portions 511 and 513, the linking portion 516 connects the connecting portions 512 and 514, and the linking portion 517 connects the linking portions 515 and 516.

The connecting portion 521 is a flat and rectangular portion that is connected (joined) to an electrode terminal 221 which the energy storage device 201 includes in the X-axis negative direction and is parallel to the XZ plane. The electrode terminal 221 is a negative electrode terminal (negative electrode terminal). The connecting portion 522 is a flat and rectangular portion that is disposed in the Z-axis negative direction of the connecting portion 521, is connected (joined) to an electrode terminal 222 which the energy storage device 205 includes in the X-axis negative direction and is parallel to the XZ plane. The electrode terminal 221 is a negative electrode terminal (negative electrode terminal). The connecting portion 523 is a flat and rectangular portion that is parallel to the XY plane and protrudes in the Y-axis negative direction from an end edge in the Z-axis positive direction of a portion in the X-axis negative direction of the connecting portion 522. The connecting portion 523 is connected (bonded) to the external terminal 31a of the bus bar 31 included in the terminal unit 30.

The linking portion 524 is a protruding portion that protrudes in the Y-axis negative direction from an end edge in the Z-axis negative direction of an end in the X-axis positive direction of connecting portion 521 and an end edge in the Z-axis positive direction of an end in the X-axis positive direction of connecting portion 522 and has a substantially C shape as viewed in the X-axis direction. Thus, the linking portion 524 connects the connecting portions 521 and 522.

### [4 Description of configuration of terminal unit 30 and periphery thereof]

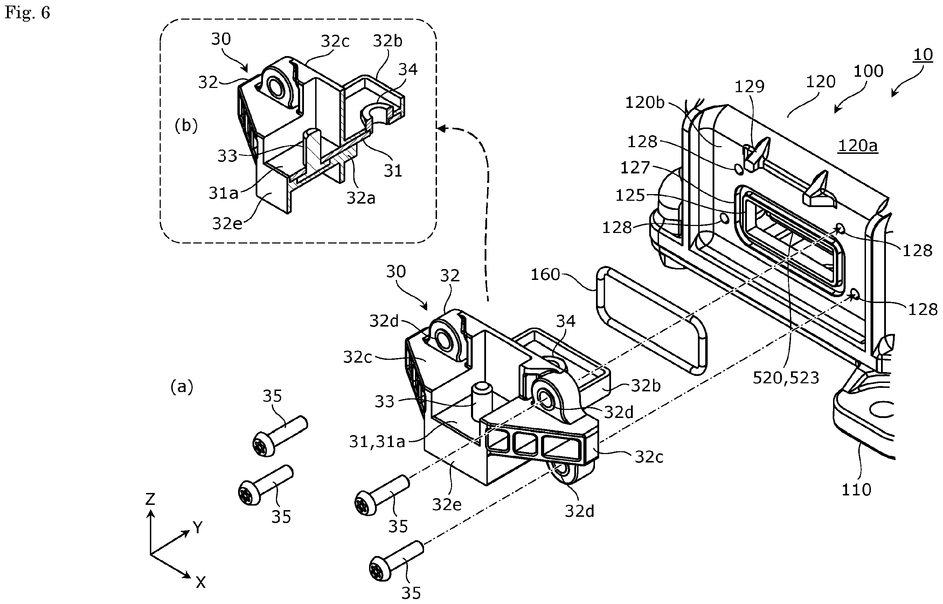

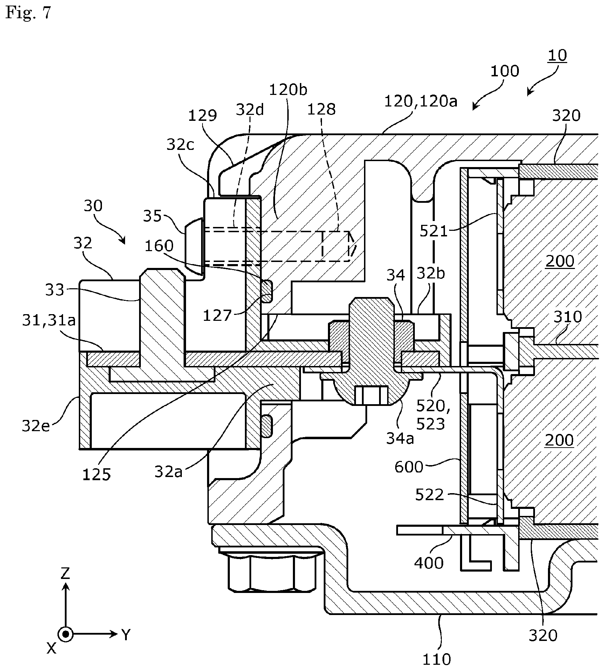

Next, a configuration of the terminal unit 30 and its periphery will be described in detail. Fig. 6 is a perspective view and a perspective cross-sectional view illustrating a configuration of the terminal unit 30 and a periphery thereof according to the present embodiment. Specifically, (a) of Fig. 6 is a perspective view illustrating the terminal unit 30 and a configuration of the through hole 125 formed in the long side wall 120b of the second outer case 120 of the outer case 100 and a periphery thereof. (b) of Fig. 6 is a perspective cross-sectional view illustrating a configuration in a case where the terminal unit 30 illustrated in (a) of Fig. 6 is taken along a plane that passes through the center of the terminal unit 30 and is parallel to the YZ plane. Fig. 7 is a cross-sectional view illustrating a configuration of the terminal unit 30 and a periphery thereof according to the present embodiment. Specifically, Fig. 7 illustrates a cross section of an end of the energy storage unit 10 in the X-axis negative direction taken along a plane that passes through the center of the terminal unit 30 and is parallel to the YZ plane.

As illustrated in Figs. 6 and 7, the terminal unit 30 includes an insulating member 32, a terminal connecting part 33, a bus bar connecting part 34, and attachment members 35 in addition to the bus bar 31 having the external terminal 31a described above. A groove 127, four recessed portions 128, and a restricting portion 129 are formed on the long side wall 120b of the second outer case 120 at a position corresponding to the terminal unit 30. A gasket 160 is disposed between the terminal unit 30 and the long side wall 120b.

The insulating member 32 is an insulating member that covers the periphery of the bus bar 31 and provides insulation between the bus bar 31 and other members. The insulating member 32 is attached to the long side wall 120b in a state of being inserted in the through hole 125 of the long side wall 120b of the second outer case 120, and protruding outward (in the Y-axis negative direction) from the through hole 125. The insulating member 32 is formed by any insulating resin material or the like that can be used for the spacers 300. In the present embodiment, the insulating member 32 is integrated (integrally formed) with the bus bar 31, the terminal connecting part 33, the bus bar connecting part 34, and the attachment members 35 by insert molding. The insulating member 32 includes an insulating portion 32a, a first insulating protruding portion 32b, a second insulating protruding portion 32c, and a terminal block 32e.

The insulating portion 32a is a portion disposed inside the through hole 125 and around the bus bar 31. The inside of the through hole 125 is a portion directed toward the center from an annular peripheral wall (inner periphery and inner edge of through hole 125) forming the through hole 125, and is an inside portion of an inner periphery of the through hole 125 when viewed from the Y-axis direction. Specifically, the insulating portion 32a is an annular portion, as viewed in the Y-axis direction, disposed inside the through hole 125 and around the bus bar 31 over the entire circumference in the X-axis direction and the Z-axis direction at a center of the bus bar 31 in the Y-axis direction. The insulating portion 32a is disposed between the peripheral wall of the through hole 125 and the bus bar 31. The insulating portion 32a ensures insulation between the long side wall 120b and the bus bar 31.

The first insulating protruding portion 32b is a protruding portion that protrudes from the insulating portion 32a in the Y-axis positive direction along the bus bar 31, and covers a surface of the bus bar 31 in the Z-axis positive direction, both side surfaces in the X-axis direction, and an end surface in the Y-axis positive direction in the inside of the second outer case 120. In the inside of the second outer case 120, a surface of the bus bar 31 in the Z-axis negative direction is exposed from the insulating member 32, and this exposed portion is connected to the bus bar 520. The bus bar connecting part 34 for connecting the bus bar 31 and the bus bar 520 is disposed on the first insulating protruding portion 32b.

As illustrated in Fig. 7, the bus bar connecting part 34 is a joining member that is joined to a joining member 34a to connect the bus bar 31 and the bus bar 520. In the present embodiment, the bus bar connecting part 34 is a nut including a female screw portion, and the joining member 34a is a bolt having a male screw portion. The joining member 34a is inserted into a through hole formed in the connecting portion 523 of the bus bar 520, and the male screw portion of the joining member 34a is screwed into the female screw portion of the bus bar connecting part 34, thereby fixing the joining member 34a to the bus bar connecting part 34. Thus, the bus bar 31 and the bus bar 520 are connected (joined).

The second insulating protruding portion 32c is a protrusion that protrudes from the insulating portion 32a along an outer surface of the long side wall 120b (wall). Specifically, the second insulating protruding portion 32c protrudes from the insulating portion 32a toward both sides in the X-axis direction and both sides in the Z-axis direction outward of the second outer case 120, and is mounted on the long side wall 120b. More specifically, four through holes 32d having a circular shape as viewed in the Y-axis direction penetrating in the Y-axis direction are formed at both ends in the X-axis direction and both ends in the Z-axis direction of the second insulating protruding portion 32c. The attachment members 35 are inserted into the four through holes 32d, and the attachment members 35 are fixed to the recessed portions 128 of the long side wall 120b, thereby attaching the second insulating protruding portion 32c to the long side wall 120b.

The attachment members 35 are members that are disposed outward on the long side wall 120b (wall) (in the Y-axis negative direction) and attach the second insulating protruding portion 32c (protruding portion) to the long side wall 120b (wall) from outside the long side wall 120b (wall) (in the Y-axis negative direction). Each attachment member 35 penetrates the through hole 32d of the second insulating protruding portion 32c (protrusion), is inserted into the recessed portion 128 formed in the outer surface of the long side wall 120b (wall), and is fixed to the long side wall 120b (wall). The recessed portion 128 is a circular recess when viewed from the Y-axis direction in which the outer surface (surface in the Y-axis negative direction) of the long side wall 120b is recessed in the Y-axis positive direction. In the present embodiment, the attachment member 35 is a screw (bolt) formed with a male screw portion, a female screw portion is formed in the recessed portion 128, and the male screw portion of the attachment member 35 is screwed into the female screw portion of the recessed portion 128, thereby fixing the attachment member 35 to the recessed portion 128. Thus, the attachment member 35 attaches the second insulating protruding portion 32c (protruding portion) to the long side wall 120b (side wall).

The gasket 160 is disposed between the long side wall 120b (wall) and the second insulating protruding portion 32c (protruding portion). Specifically, the groove 127 is formed around the through hole 125 in the long side wall 120b, and the gasket 160 is disposed in the groove 127. The groove 127 is an annular groove (recessed portion) when viewed from the Y-axis direction in which the outer surface (surface in the Y-axis negative direction) of the long side wall 120b is recessed in the Y-axis positive direction over the entire circumference of the through hole 125. The groove 127 is disposed closer to the through hole 125 than the recessed portions 128. The groove 127 is disposed between the recessed portions 128 and the through hole 125. Accordingly, the gasket 160 is disposed between the attachment members 35 and the through hole 125.

The gasket 160 is an annular O-ring when viewed from the Y-axis direction, and is disposed in the groove 127 over the entire length of the groove 127. The gasket 160 is disposed in a compressed state between the long side wall 120b and the second insulating protruding portion 32c. The gasket 160 is formed by rubber (natural rubber or synthetic rubber), any insulating resin material usable for the spacers 300, or the like.

The restricting portion 129 that restricts movement of the second insulating protruding portion 32c (terminal unit 30) in the Z-axis positive direction is formed on an end of the long side wall 120b in the Z-axis positive direction with respect to the through hole 125. The restricting portion 129 is a protrusion that is disposed in the Z-axis positive direction of the second insulating protruding portion 32c when the second insulating protruding portion 32c is attached to the long side wall 120b and protrudes in the Y-axis negative direction from the outer surface of the long side wall 120b. When the external terminal 31a is lifted in the Z-axis positive direction when an external conductive member is connected to the external terminal 31a, the restricting portion 129 abuts on the second insulating protruding portion 32c in the Z-axis direction, thereby preventing the terminal unit 30 from rising (moving in the Z-axis positive direction).

The terminal block 32e is a portion that protrudes from the insulating portion 32a in the Y-axis negative direction along the bus bar 31, and covers a surface of the bus bar 31 in the Z-axis negative direction, both side surfaces in the X-axis direction, and an end surface in the Y-axis negative direction outward of the second outer case 120. A surface of the bus bar 31 in the Z-axis positive direction is exposed from the insulating member 32 outward of the second outer case 120, and this exposed portion functions as the external terminal 31a. As described above, the terminal block 32e is a base that supports the external terminal 31a outside the second outer case 120. The terminal connecting part 33 is disposed on the terminal block 32e.

The terminal connecting part 33 is a portion for connecting an external conductive member to the external terminal 31a. In the present embodiment, the terminal connecting part 33 is a bolt including a male screw portion, is inserted into a through hole formed in the external terminal 31a from the Z-axis negative direction, and is disposed in a state of protruding from the external terminal 31a in the Z-axis positive direction. An end of the terminal connecting part 33 in the Z-axis negative direction (the head portion of the bolt) is embedded in the terminal block 32e.

### [5 Description of effect]

As described above, the energy storage apparatus 1 according to the embodiment of the present invention has a configuration in which the through hole 125 is formed at a position where the bus bar 31 of the terminal unit 30 is desired to be disposed in the wall (the long side wall 120b) of the outer case 100, and the bus bar 31 penetrates the through hole 125. Thus, since the bus bar 31 can be arranged at a desired position, the degree of freedom of the arrangement position of the bus bar 31 can be improved.

When the long side wall 120b in which the through hole 125 is formed is made of metal, the long side wall 120b and the bus bar 31 may be electrically connected to each other. Accordingly, the through hole 125 is formed in the metal long side wall 120b of the outer case 100, the bus bar 31 is made to penetrate the through hole 125, and the insulating portion 32a of the insulating member 32 is disposed inside the through hole 125 and around the bus bar 31 in the terminal unit 30. Thus, it is possible to improve a degree of freedom of an arrangement position of the bus bars 31 while improving insulation property between walls (long side walls 120b) of the outer case 100 and the bus bars 31.

The attachment members 35 for mounting the second insulating protruding portion 32c (protruding portion) of the insulating member 32 of the terminal unit 30 to the long side wall 120b from outside the long side wall 120b are disposed outward on the long side wall 120b of the outer case 100. Thus, the insulating member 32 can be easily attached to the long side wall 120b by the attachment members 35. Therefore, it is possible to easily improve the insulation between the wall (the long side wall 120b) of the outer case 100 and the bus bar 31 and to improve the degree of freedom of the arrangement position of the bus bar 31.

When the insulating member 32 of the terminal unit 30 is attached to the long side wall 120b of the outer case 100 by the attachment members 35, the attachment members 35 are not made to penetrate the long side wall 120b, but the attachment members 35 are inserted into the recessed portions 128 formed in the outer surface of the long side wall 120b and fixed to the long side wall 120b. Thus, through holes through which the attachment members 35 penetrate are not formed in the wall (the long side wall 120b) of the outer case 100, and hence sealability of the outer case 100 can be enhanced.

By disposing the gasket 160 between the long side wall 120b of the outer case 100 and the second insulating protruding portion 32c of the insulating member 32 of the terminal unit 30, it is possible to improve the sealability of the outer case 100 by the insulating member 32 (sealability of the through hole 125 of the long side wall 120b by the insulating member 32). By disposing the gasket 160 between the attachment members 35 and the through hole 125 of the long side wall 120b, the through hole 125 can be sealed by the gasket 160 near the through hole 125. Thus, the sealability of the outer case 100 by the insulating member 32 (sealability of the through hole 125 of the long side wall 120b by the insulating member 32) can be further enhanced.

By attaching the second insulating protruding portion 32c of the insulating member 32 of the terminal unit 30 to the long side wall 120b that is a side wall of the outer case 100, it is possible to suppress the insulating member 32 from protruding in the height direction of the outer case 100. Thus, it is possible to suppress an increase in height of the energy storage apparatus 1.

### [6 Description of modification example]

Although the energy storage apparatus 1 according to the embodiment of the present invention has been described above, the present invention is not limited to the present embodiment. The embodiment disclosed herein is illustrative in all respects and is not restrictive, and the scope of the present invention includes all modifications within the meaning and scope equivalent to the claims.

In the above-mentioned embodiment, in the outer case 100, the second outer case 120 is a member having a bottomed rectangular cylindrical shape in which an opening is formed on the Z-axis negative direction side, and the first outer case 110 is a flat rectangular member that closes the opening of the second outer case 120. However, the first outer case 110 may be a bottomed rectangular cylindrical member having an opening formed on the Z-axis positive direction side, and the second outer case 120 may be a flat rectangular lid that closes the opening of the first outer case 110, or may have any other shape.

In the above-mentioned embodiment, the whole of the second outer case 120 is formed by a member made of metal. However, a configuration may be employed in which a portion other than the long side wall 120b that is a wall where the through hole 125 which the bus bar 31 penetrates is formed is not formed by metal. The long side wall 120b in which the through hole 125 is formed may not be made of metal but may be an insulating member such as resin. That is, the whole of the second outer case 120 may be an insulating member made of resin or the like. The long side wall 120b or the second outer case 120 can be formed by any insulating resin material or the like that can be used for the spacer 300. In this case, the insulating portion 32a (insulating member 32) may not be disposed inside the through hole 125 and around the bus bar 31.

In the above embodiment, in the terminal unit 30, the insulating portion 32a of the insulating member 32 is disposed over the entire periphery of the bus bar 31, but a configuration may be employed in which it is not disposed on a part of the entire periphery of the bus bar 31.

In the above embodiment, the attachment members 35 are inserted into the recessed portions 128 formed in the outer surface of the long side wall 120b and fixed to the long side wall 120b. However, the attachment members 35 may be inserted into recessed portions formed in an inner surface of the long side wall 120b and fixed to the long side wall 120b, or may be inserted into through holes formed in the long side wall 120b and fixed to the long side wall 120b.

In the above embodiment, the terminal unit 30 is attached to the long side wall 120b from outside the long side wall 120b by the attachment members 35 in the second insulating protruding portion 32c of the insulating member 32. However, the terminal unit 30 may be attached to the long side wall 120b by fitting, engagement, caulking, welding (welding), or the like without using the attachment members 35. The terminal unit 30 may be attached to the long side wall 120b from the inside of the long side wall 120b.

In the above embodiment, the gasket 160 is disposed closer to the through hole 125 than the attachment members 35 (between the attachment members 35 and the through hole 125), but may be disposed farther from the through hole 125 than the attachment members 35. Alternatively, a configuration may be employed in which the gasket 160 is not disposed.

In the above-mentioned embodiment, the wall where the through hole 125 through which the bus bar 31 penetrates is formed is the long side wall 120b of the second outer case 120. However, the through hole 125 may be formed in any wall of the outer case 100 such as the upper wall 120a or the short side wall 120c of the second outer case 120, or the first outer case 110.

The energy storage apparatus 1 does not need to include all the components described above. The energy storage apparatus 1 may not include the control unit 20, the spacers 300, the bus bar plate 400, the bus bar cover 600, or the like.

A form constructed by arbitrarily combining the components included in the above embodiment and the modifications thereof is also included in the scope of the present invention.

The present invention can be implemented not only as the energy storage apparatus 1 but also as a combination of the outer case 100 and the bus bar 31 or a combination of the outer case 100 and the terminal unit 30 (the bus bar 31 and the insulating member 32).

### INDUSTRIAL APPLICABILITY

The present invention can be applied to an energy storage apparatus including an energy storage device such as a lithium ion secondary battery.

### DESCRIPTION OF REFERENCE SIGNS

1: energy storage apparatus
21, 31a: external terminal
30: terminal unit
31, 500, 510, 520, 530: bus bar
32: insulating member
32a: insulating portion
32b: first insulating protruding portion
32c: second insulating protruding portion
32d, 125: through hole
32e: terminal block
33: terminal connecting part
34: bus bar connecting part
34a, 130, 140: joining member
35: attachment member
100: outer case
110: first outer case
120: second outer case
120b: long side wall
127: groove
128: recessed portion
129: restricting portion
160, 230, 240: gasket
200, 201, 202, 203, 204, 205, 206, 207, 208: energy storage device
210: case
220, 221, 222, 223, 224, 225, 226: electrode terminal
250: current collector
260: electrode assembly
300: spacer
400: bus bar plate
600: bus bar cover

## Claims

1. An energy storage apparatus comprising:
an energy storage device;
an outer case that accommodates the energy storage device and includes a wall in which a through hole is formed; and
a bus bar penetrating the through hole.

2. The energy storage apparatus according to claim 1, wherein
the wall is made of metal, and
the energy storage apparatus further comprising:
an insulating member including an insulating portion disposed inside the through hole and around the bus bar.

3. The energy storage apparatus according to claim 2, wherein
the insulating member further includes a protruding portion protruding from the insulating portion along an outer surface of the wall, and
the energy storage apparatus further comprising:
an attachment member that is disposed outward on the wall and attaches the protruding portion to the wall from outside the wall.

4. The energy storage apparatus according to claim 3, wherein
the attachment member penetrates the protruding portion, is inserted into a recessed portion formed in the outer surface of the wall, and is fixed to the wall.

5. The energy storage apparatus according to claim 3 or 4, further comprising:
a gasket disposed between the wall and the protruding portion, wherein
the gasket is disposed between the attachment member and the through hole.

6. The energy storage apparatus according to any one of claims 3 to 5, wherein
the wall is a side wall of the outer case, and
the attachment member attaches the protruding portion to the side wall.
